# EUROPÄISCHE PATENTSCHRIFT

(11) **EP 0 399 368 B1**
(45) Veröffentlichungstag und Bekanntmachung des Hinweises auf die Patenterteilung: **07.07.1993**
(21) Anmeldenummer: 90109306.2
(22) Anmeldetag: 17.05.1990
(51) Int. Cl.: B60J 3/02

(54) **Sonnenblende für Kraftfahrzeuge**
Sun visor for motor vehicles
Pare-soleil pour véhicules automobiles

(30) Priorität: 20.05.1989 DE 3916560
(43) Veröffentlichungstag der Anmeldung: 28.11.1990
(73) Patentinhaber: EUGEN ZIPPERLE GMBH & CO. KG, D-71674 Asperg (DE)
(72) Erfinder: Zipperle, Michael, Dipl.-Ing., D-7140 Ludwigsburg (DE)
(74) Vertreter: Patentanwälte Bartels und Partner

(56) Entgegenhaltungen:
- DE-A- 2 911 464
- DE-A- 2 932 302
- DE-A- 3 614 481

## Beschreibung

Die Erfindung betrifft eine Sonnenblende für Kraftfahrzeuge, welche die Merkmale des Oberbegriffs des Anspruches 1 aufweist, siehe z.B. die DE-A-2 911 464.

Bei den bekannten Sonnenblenden dieser Art enthält die Achse ein Kupferrohr, das über beide Achsenenden übersteht, wobei der im Inneren des Lager- und Kontaktkörpers liegende Endabschnitt auf die Hälfte seines Umfangs reduziert ist zur Bildung des Kontaktstückes. An dieses Kontaktstück ist das eine Ende eines Verbindungskabels angelötet, das durch das Kupferrohr hindurchgeführt ist und über das andere Ende übersteht.

Da das zweite Verbindungskabel schon vor der Montage der Achse mit der Beleuchtungseinrichtung im Blendenkörper verbunden sein muß, muß dieses Kabel vor der Montage der Achse durch das Kupferrohr hindurchgezogen werden. Daher kann die Verbindung der beiden Kabel mit dem zugehörigen Stecker, über den der Anschluß an das Bordnetz erfolgt, erst nach der Montage der Achse vorgenommen werden, wobei zuvor noch ein Schutzschlauch über die beiden Kabel geschoben werden muß, um die Gefahr eines Kurzschlußes durch ein Scheuern am Austritt der Kabel aus dem Kupferrohr zu vermeiden. Beim Einstecken der Achse in den Lager- und und Kontaktkörper kann es vorkommen, daß das durch das Kupferrohr hindurchgezogene Kabel sich um das Achsende wickelt und dann auf Zug und/oder Abscherung belastet wird, was zu einem versteckten Kurzschluß führen kann. Schließlich kann ein fehlerhafter Anschluß dazu führen, daß der Gegenkontakt im Lager- und Kontaktkörper nicht die Verbindung des spannungsführenden kabels unterbricht, sondern den auf Massepotential liegenden Leitungszug.

Der Erfindung liegt die Aufgabe zugrunde, eine Sonnenblende zu schaffen, welche kostengünstig und dennoch störunanfälliger ist. Diese Aufgabe löst eine Sonnenblende mit den Merkmalen des Anspruches 1.

Der Einleger bietet zum einen den Vorteil, daß nur der Ergänzungskörper aus einem hochwertigen Kunststoff hergestellt werden muß, für den Einleger hingegen ein wesentlich billigerer Kunststoff verwendet werden kann. Ferner ermöglicht er es, die bereits mit dem zugeordneten Kontaktstück verbundenen und vorzugsweise auch schon an die Kontaktstecker angeschlossenen elektrischen Leiter einlegen zu können, so daß nach dem Umspritzen dieses Kompletteils die Achse nur noch in den Lager- und Kontaktkörper sowie den Lagerbock eingesteckt zu werden braucht. Es entfällt also das Hindurchziehen eines Kabels durch die Achse und damit auch die Gefahr, daß sich eines der beiden Kabel im Inneren des Lager- und Kontaktkörpers um das Achsende wickelt. Durch Wegfall des Kupferrohres besteht auch nicht mehr die Gefahr, daß die Kabel an dem im Lagerbock gelagerten Ende der Achse blankgescheuert werden. Hinzu kommt als weiterer Vorteil, daß der Strompfad beider Leiter im hochgeklappten Zustand des Blendenkörpers unterbrochen ist, so daß ein eventuell nicht sichtbarer Kurzschluß in der Beleuchtungseinrichtung nicht zu einem Stromfluß führen kann, wenn der Blendenkörper hochgeklappt ist.Schließlich läßt sich durch den Einleger auch eine beträchtliche Gewichtsreduzierung der Achse erreichen, die im Bereich von 30° liegen kann.

Vorteilhafte Ausgestaltungen und Weiterbildungen einer derartigen Sonnenblende sind Gegenstand der Unteransprüche.

Im Folgenden ist die Erfindung anhand eines in der Zeichnung dargestellten Ausführungsbeipiels im einzelnen erläutert. Es zeigen:
- Fig. 1: eine Ansicht des Ausführungsbeispiels mit in der Gebrauchslage stehendem Blendenkörper,
- Fig. 2: eine vergrößert dargestellte Seitenansicht des Einlegers,
- Fig. 3: einen vergrößert dargestellten Schnitt nach der Linie III-III der Fig. 2,
- Fig. 4: einen vergrößert dargestellten Schnitt nach der Linie IV-IV der Fig. 2,
- Fig. 5: eine vergrößert dargestellte Seitenansicht der Achse,
- Fig. 6: einen Schnitt nach der Linie VI-VI der Fig. 5,
- Fig. 7: einen Schnitt nach der Linie VII-VII der Fig. 5,
- Fig. 8: eine Seitenansicht des Lager- und Kontaktkörpers mit eingesetzter Achse,
- Fig. 9: einen vergrößert dargestellten Längsschnitt des Lager- und Kontaktkörpers mit eingesetzter Achse.

Eine Sonnenblende für Kraftfahrzeuge weist einen gepolsterten Blendenkörper 1 auf, welcher auf der in der Gebrauchslage dem Fahrgast zugekehrten Seite einen Spiegel 2 trägt, neben dem auf beiden Seiten je eine Beleuchtungseinheit 3 angeordnet ist. Der Blendenkörper 1 ist auf einer als Ganzes mit 4 bezeichneten Achse klappbar gelagert. Zu diesem Zwecke ist im Inneren des Blendenkörpers 1 ein Lager- und Kontaktkörper 5 festgelegt, in den von der einen Schmalseite des Blendenkörpers 1 her der längere Schenkel 6 der beiden rechtwinklig zueinander angeordneten Schenkel 6 und 7 der Achse 4 eingesteckt ist. Der kürzere Schenkel 7 ist drehbar in einem Lagerbock 8 gelagert, welcher an die Karosserie des Kraftfahrzeuges angeschraubt wird und es ermöglicht, den Blendenkörper 1 zum Seitenfenster hin zu schwenken.

Die Achse 4 enthält in ihrem Inneren einen stabförmigen Einleger 9, welcher wie die Achse 4 abgewinkelt ist. Mit Ausnahme des freien Endabschnittes 9' am längeren Schenkel hat der stabförmige Einleger 9, der aus einem kostengünstigen Kunststoff besteht, einen kreisförmigen Querschnitt, wobei im Ausführungsbeispiel der andere Endabschnitt 9'' einen etwas größeren Durchmesser hat. Über die gesamte Länge des Einlegers 9 erstrecken sich zwei diametral angeordnete Längsnuten 10, die zur Außenmantelfläche hin offen sind.

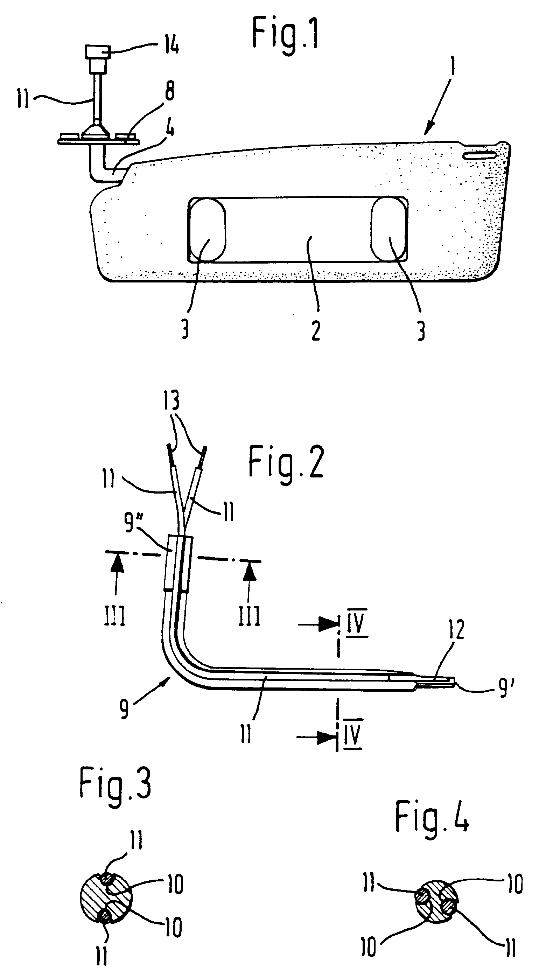

Die Längsnuten 10 dienen der Aufnahme je eines isolierten Verbindungskabels 11 und je eines stabförmigen Kontaktstückes 12. Wie Fig. 2 zeigt, liegen die Kontaktstücke 12 auf einem Teil ihrer Länge in der Längsnut 10 und auf dem restlichen Teil ihrer Länge am Endabschnitt 9' an. Die beiden Verbindungskabel 11 sind mit dem einen bzw. anderen Kontaktstück 12 mechanisch und elektrisch leitend verbunden. Ihre über den Endabschnitt 9'' des Einlegers 9 überstehenden Abschnitte sind mit je einem Steckkontakt 13 vercrimpt. Die Steckkontakte 13 sind ferner im Ausführungsbeispiel in ein Steckergehäuse 14 eingesetzt.

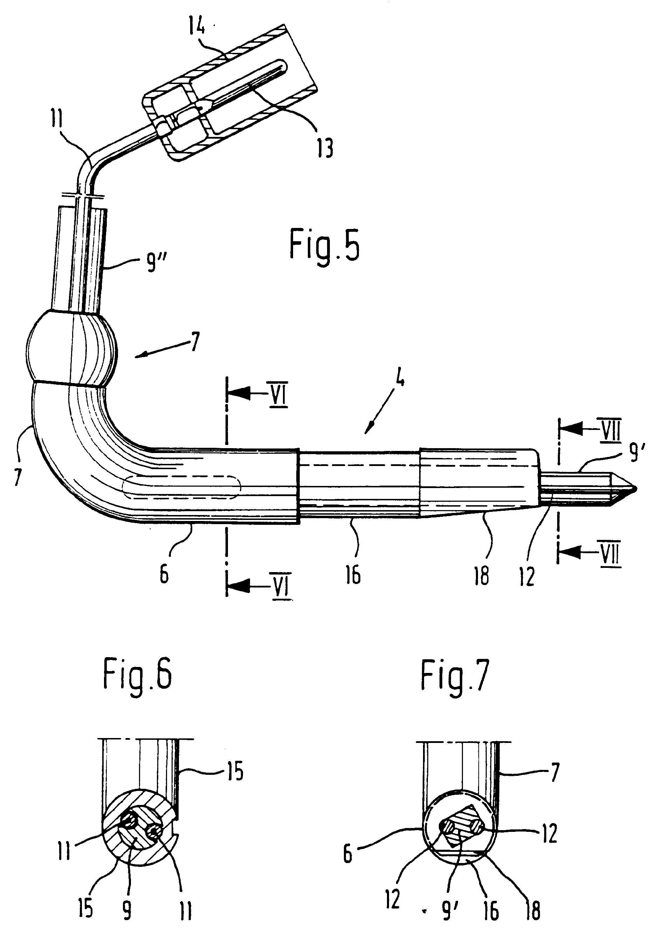

Der Einleger 9 wird nach dem Einlegen der Verbindungskabel 11 und der Kontaktstücke 12 durch Umspritzen zu der Achse 4 ergänzt. Dabei wird ein Ergänzungsteil 15 gebildet. Wie Fig. 5 zeigt, bildet das Ergänzungsteil 15 in Bereich des kürzeren Schenkels 7 im Anschluß an den Endabschnitt 9'' des Einlegers 9 eine unvollständige Kugel, welche im Lagerbock 8 zu liegen kommt. Im Abstand vom Ende des langen Schenkels 6 ist der Ergänzungskörper mit einer Abflachung 16 versehen, die mit einer Rastfeder 17 des Lager- und Kontaktkörpers 5 zusammenwirkt und den Blendenkörper 1 in der Nichtgebrauchslage verrastet. An diese Abflachung 16 schließt sich eine Schrägfläche 18 an, die sich bis zum benachbarten Ende des Ergänzungskörpers 15 erstreckt und dort in den Endabschnitt 9' übergeht. Hierdurch kann problemlos beim Einstecken des langen Schenkels 6 in den Lager- und Kontaktkörper 5 die Rastfeder 17 im erforderlichen Maße aus dem den langen Schenkel 6 aufnehmenden Kanal 20 des Lager und Kontaktkörpers 5 herausgedrückt werden.

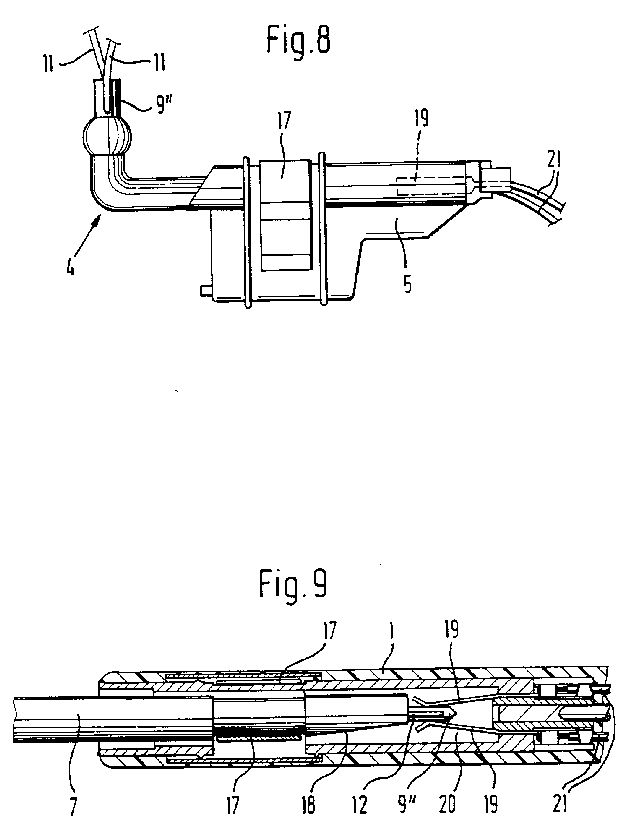

Wie Fig. 7 zeigt, hat der Endabschnitt 9' eine etwa rechteckförmige Querschnittskontur und ein keilförmiges, über die Enden der Kontaktstücke 12 überstehendes Ende. Dieses keilförmige Ende drückt beim Einstecken des langen Schenkels 6 der Achse 4 in den Lager- und Kontaktkörper 5 dessen beide radial federnde Kontaktzungen 19 auseinander, welche sich in Längsrichtung des den langen Schenkels 6 aufnehmenden Kanals 20 erstrecken und an dem der Einführungsöffnung für den langen Schenkel 6 gegenüberliegenden Ende des Kanals 20 im Lager- und Kontaktkörper 5 festgelegt sind. Hier sind an die Kontaktzungen 19 Verbindungskabel 21 durch Verpressen angeschlossen, welche zu den beiden Beleuchtungseinheiten 3 führen. In der in Fig. 9 dargestellten Nichtgebrauchslage des Blendenkörpers 1 sind die beiden Kontaktzungen 19 durch den elektrisch isolierenden Endabschnitt 9' distanziert. Wird der Blendenkörper 1 in seine Gebrauchslage geschwenkt, dann kommt das eine Kontaktstück 12 in Anlage an die eine Kontaktzunge das andere Kontaktstück 12 in Anlage an die andere Kontaktzunge 19. Es handelt sich deshalb hier um einen zweipoligen Schalter.

Der aus Kunststoff bestehende Lager- und Kontaktkörper 5 ist, wie Fig. 9 zeigt, in den Blendenkörper 1 eingebettet. Die den Blendenkörper 1 umhüllende Folie ist in Fig. 9 jedoch nicht dargestellt.

Die Montage der erfindungsgemäßen Sonnenblende beschränkt sich auf das Einsetzen des kugeligen Teils des kürzeren Schenkels 7 in den Lagerbock 8 und das Einstecken des langen Schenkels 6 in den Blendenkörper 1 und die den in diesem festgelegten Lager- und Kontaktkörper 5.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Sonnenblende für Kraftfahrzeuge mit
a) einem eine Beleuchtungseinrichtung (3) enthaltenden Blendenkörper (1),
b) einer abgewinkelten Achse (4) mit einem aus Kunststoff bestehenden Ergänzungskörper (15), deren einer Schenkel (7) in einem an der Fahrzeugkarosserie zu befestigenden Lagerbock (8) und deren anderer, die Klappachse für den Blendenkörper bildender Schenkel (7) in einem im Blendenkörper angeordneten Lager- und Kontaktkörper (5) drehbar gelagert ist,
c) einem Kontaktstück (12) an dem im Lager- und Kontaktkörper (5) liegenden Ende (9) der Achse (4), das einen Gegenkontakt (19) im Lager- und Kontaktkörper nur in der Gebrauchslage des Blendenkörpers (1) kontaktiert, sowie
d) zwei über das Ende des im Lagerbock (8) gelagerten Schenkels der Achse überstehenden, isolierten elektrischen Leitern (11), die im Inneren der Achse (4) liegen und von denen der eine mit dem Kontaktstück (12) leitend verbunden ist,
dadurch gekennzeichnet, daß
e) die Achse (4) einen stabförmigen Einleger (9) aus Kunststoff enthält, der mit zwei zu seiner Mantelfläche hin offenen Längsnuten (10) versehen ist, welche sich über die gesamte Länge des Einlegers (9) erstrecken,
f) in der einen Längsnut (10) das Kontaktstück (12) und der mit ihm verbundene elektrische Leiter (11) und in der anderen Längsnut (10) der andere elektrische Leiter (11) und ein mit ihm leitend verbundenes zweites Kontaktstück (12) liegen,
g) der Einleger (9) zumindest zwischen einem Endabschnitt (9') des die Kontaktstücke (12) tragenden Teils und einer Endzone (9'') des anderen Endes in den aus Kunststoff bestehenden Ergänzungskörper (15) eingebettet ist, der den Einleger (9) zu der Achse (4) vervollständigt,
h) der Lager- und Kontaktkörper (5) einen zweiten Gegenkontakt (19) aufweist, der ebenfalls nur in der heruntergeklappten Gebrauchsstellung des Blendenkörpers (1) das ihm zugeordnete Kontaktstück (12) kontaktiert.

2. Sonnenblende nach Anspruch 1, dadurch gekennzeichnet, daß die beiden Längsnuten (10) diametral zueinander im Einleger (9) angeordnet sind.

3. Sonnenblende nach Anspruch 1 oder 2, dadurch gekennzeichnet, daß der überstehende Abschnitt der elektrischen Leiter (11) an seinem freien Ende mit je einem Steckkontakt (13) verbunden, vorzugsweise verpresst ist.

4. Sonnenblende nach Anspruch 3, dadurch gekennzeichnet, daß die beiden Steckkontakte (13) in einem elektrisch isolierenden Steckergehäuse (14) liegen.

5. Sonnenblende nach einem der Ansprüche 1 bis 4, dadurch gekennzeichnet, daß die Achse (4) im Anschluß an eine mit einer Rastfeder (17) des Lager- und Kontaktkörpers (5) zusammenwirkende Abflachungen (16) eine Schrägfläche (18) aufweist, deren Abstand von Zentrum der Achse (4) gegen den überstehenden Endabschnitt (9') des Einlegers (9) hin kleiner wird.

6. Sonnenblende nach einem der Ansprüche 1 bis 5, dadurch gekennzeichnet, daß der Einleger (9) in dem über den Ergänzungskörper (15) überstehenden Endabschnitt (9') abgesehen von den beiden Längsnuten (10), einen im wesentlichen rechteckförmigen Querschnitt hat und jede der beiden Längsnuten (10) zumindest nahe einem der Eckbereiche angeordnet ist.

7. Sonnenblende nach einem der Ansprüche 1 bis 6, dadurch gekennzeichnet, daß die beiden Gegenkontakte durch zwei sich in Längsrichtung eines die Achse (4) aufnehmenden Kanals (20) des Lager- und Kontaktkörpers (5) erstreckende, radial federnde Zungen (19) gebildet sind, zwischen die der Endabschnitt (9') des Einlegers (9) eingesteckt ist.

## Claims

1. Sun visor for motor vehicles which has:
a) a visor body (1) containing a lighting device (3);
b) an angled shaft (4) which has an extension member (15) made of plastics material and of which one leg (7) is rotatably mounted in a bracket (8) which is to be secured on the vehicle bodywork and of which the other leg (7), forming the hinging axis for the visor body, is rotatably mounted in a bearing and contact member (5) disposed in the visor body;
c) a contact member (12) at the end (9') of the shaft (4) which is located in the bearing and contact member (5) and contacts a counter-contact (19) in the bearing and contact member only when the sun visor (1) is in the position of use; and
d) two insulated electrical conductors (11) which project beyond the end of the shaft leg mounted in the bracket (8), are located within the shaft (4), and of which one is conductively connected to the contact member (12), characterised in that:
e) the shaft (4) contains a rod-shaped, plastics material feeder (9) which is provided with two longitudinal grooves (10) which are open towards the generated surface of the feeder and extend over the entire length thereof;
f) the contact member (12) and electrical conductor (11) connected thereto are located in one longitudinal groove (10) and the other electrical conductor (11) and a second contact member (12) conductively connected thereto are located in the other longitudinal groove (10);
g) the feeder (9) is embedded at least between one end section (9') of the part supporting the contact members (12) and an end area (9'') of the other end in the extension member (15) which is made of plastics material and completes the feeder (9) towards the shaft (4);
h) the bearing and contact member (5) comprises a second counter-contact (19) which likewise contacts the contact member (12) associated therewith only when the visor body (1) is in the downwardly tilted position of use.

2. Sun visor according to Claim 1, characterised in that the two longitudinal grooves (10) are disposed diametrically opposite one another in the feeder (9).

3. Sun visor according to Claim 1 or Claim 2, characterised in that the projecting section of the electrical conductors (11) is connected, preferably crimped, at its free end to one plug-in contact (13) in each case.

4. Sun visor according to Claim 3, characterised in that the two plug-in contacts (13) are located in an electrically insulating plug housing (14).

5. Sun visor according to any one of Claims 1 to 4, characterised in that the shaft (4) comprises an inclined surface (18) which adjoins a flattened portion (16) cooperating with a detent spring (17) of the bearing and contact member (5) and of which the distance from the centre of the shaft (4) decreases towards the projecting end section (9') of the feeder (9).

6. Sun visor according to any one of Claims 1 to 5, characterised in that the end section (9') of the feeder (9) projecting over the extension member (15) has a substantially rectangular cross-section, apart from the two longitudinal grooves (10), and each of the longitudinal grooves (10) is disposed at least adjacent one of the corner regions.

7. Sun visor according to any one of Claims 1 to 6, characterised in that the two counter-contacts are formed by two radially resilient tongues (19) which extend in the longitudinal direction of a duct (20) in the bearing and contact member (5) accommodating the shaft (4) and between which the end section (9') of the feeder is inserted.

## Revendications

1. Pare-soleil pour véhicules automobiles comportant
a) un corps (1) contenant un dispositif d'éclairage (3),
b) un axe (4) coudé avec un corps de complément (15) en matière plastique, dont une branche (7) est montée dans un support de palier (8), à fixer sur la carrosserie du véhicule et dont l'autre branche (7), formant l'axe de rabattement du corps du pare-soleil, est montée tournante dans un corps d'appui et de contact (5), monté dans le corps du pare-soleil,
c) une pièce de contact (12) à l'extrémité (9), située dans le corps d'appui et de contact (5), de l'axe (4), qui n'est en contact avec le contre-contact (19), dans le corps d'appui et de contact, qu'en position d'utilisation du corps (1) du pare-soleil ainsi que
d) deux conducteurs électriques (11) isolés, dépassant de l'extrémité de la branche de l'axe, montée dans le support de palier (8), lesquels conducteurs se situent à l'intérieur de l'axe (4) et dont un est relié, de manière conductrice, avec la pièce de contact (12),
caractérisé en ce que
e) l'axe (4) contient un insert (9) en forme de barre, en matière plastique, qui est pourvu de deux rainures longitudinales (10), ouvertes vers sa surface d'enveloppe, qui s'étendent sur toute la longueur de l'insert (9),
f) dans une rainure longitudinale (10) se situent la pièce de contact (12) et le conducteur électrique (11) relié à celle-ci et, dans l'autre rainure longitudinale (10), l'autre conducteur électrique (11) et une seconde pièce de contact (12) reliée, de manière conductrice, avec celui-ci,
g) l'insert (9) est enrobé, au moins entre une portion terminale (9') de la partie portant les pièces de contact (12) et une zone terminale (9'') de l'autre extrémité, dans le corps de complément (15) en matière plastique, qui complète l'insert (9) pour donner l'axe (4),
h) le corps d'appui et de contact (5) comporte un second contre-contact (19) qui n'est aussi en contact avec la pièce de contact (12) qui lui est associée, que dans la position d'utilisation rabattue vers le bas du corps (1) du pare-soleil.

2. Pare-soleil selon la revendication 1, caractérisé en ce que les deux rainures longitudinales (10) sont disposées diamétralement l'une par rapport.à l'autre dans l'insert (9).

3. Pare-soleil selon les revendications 1 ou 2, caractérisé en ce que la portion dépassante des conducteurs électriques (11) est reliée à son extrémité libre avec un contact enfichable (13), de préférence pressé.

4. Pare-soleil selon la revendication 3, caractérisé en ce que les deux contacts enfichables (13) se trouvent dans un boîtier de connecteur (14) électriquement isolant.

5. Pare-soleil selon l'une des revendications 1 à 4, caractérisé en ce que l'axe (4) présente, à la suite d'une partie aplatie (16), coopérant avec un ressort d'encliquetage (17) du corps d'appui et de contact (5), une surface oblique (18) dont la distance par rapport au centre de l'axe (4) diminue vers la portion terminale (9') dépassante de l'insert (9).

6. Pare-soleil selon l'une des revendications 1 à 5, caractérisé en ce que l'insert (9) présente une section transversale sensiblement rectangulaire, dans la portion terminale (9') dépassant du corps de complément (15), à l'exception des deux rainures longitudinales (10), et chacune des deux rainures longitudinales (10) est située au moins à proximité de l'une des zones d'angle.

7. Pare-soleil selon l'une des revendications 1 à 6, caractérisé en ce que les deux contre-contacts sont formés par deux languettes (19), radialement élastiques, s'étendant dans la direction longitudinale d'un canal (20), logeant l'axe (4), du corps d'appui et de contact (5), languettes entre lesquelles est insérée la portion terminale (9') de l'insert (9).
